# EUROPÄISCHE PATENTSCHRIFT

(11) **EP 3 240 945 B1**
(45) Veröffentlichungstag und Bekanntmachung des Hinweises auf die Patenterteilung: **04.03.2020**
(21) Anmeldenummer: 15763581.4
(22) Anmeldetag: 15.09.2015
(51) Int. Cl.: F01D 19/02, F01D 21/12, F01D 25/10, F02C 1/02, F02C 6/14, F02C 7/141, F02C 7/18, F02C 6/16, F01D 25/14, F02C 7/143

(54) **DRUCKLUFTSPEICHERKRAFTWERK SOWIE VERFAHREN ZUM BETREIBEN EINES DRUCKLUFTSPEICHERKRAFTWERKS**
COMPRESSED AIR STORAGE POWER PLANT AND METHOD FOR OPERATING A COMPRESSED AIR STORAGE POWER PLANT
CENTRALE D'ACCUMULATION D'AIR COMPRIMÉ ET PROCÉDÉ POUR FAIRE FONCTIONNER UNE CENTRALE D'ACCUMULATION D'AIR COMPRIMÉ

(30) Priorität: 17.02.2015 DE 102015202829
(43) Veröffentlichungstag der Anmeldung: 08.11.2017
(73) Patentinhaber: Siemens Aktiengesellschaft, 80333 München (DE)
(72) Erfinder: HERTWIG, Holger, 02708 Großschweidnitz (DE)
(86) Internationale Anmeldenummer: PCT/EP2015/071055
(87) Internationale Veröffentlichungsnummer: WO 2016/131502

(56) Entgegenhaltungen:
- EP-A1- 2 574 757
- WO-A1-03/078812
- DE-A1- 3 440 579
- GB-A- 301 298
- GB-A- 2 476 489

## Beschreibung

Die vorliegende Erfindung betrifft ein Druckluftspeicherkraftwerk, umfassend einen Druckluftspeicher, wenigstens einen Kompressor der zur Beaufschlagung des Druckluftspeichers mit Luft über zumindest eine Kompressorleitung mit dem Druckluftspeicher fluidkommunizierend verbunden ist, sowie einen Expander, der zur Entspannung des Druckluftspeichers über zumindest eine Expanderleitung mit dem Druckluftspeicher fluidkommunizierend verbunden ist. Ferner betrifft die Erfindung ein Verfahren zum Betreiben eines Druckluftspeicherkraftwerks.

Energiespeicheranlagen, wie Druckluftspeicherkraftwerke, gewinnen immer mehr an Bedeutung. Diese dienen dazu in Schwachlastzeiten Energie zu speichern, um diese in Hochlastzeiten wieder bereitzustellen. Eine Möglichkeit Energie zu speichern und gleichzeitig das Stromnetz zu stabilisieren besteht darin, Luft in Schwachlastzeiten zu verdichten und unter hohem Druck (Compressed Air Energy Storage - "CAES") gegebenenfalls verflüssigt (Liquified Air Energy Storage - "LAES") zu speichern. In Spitzenlastzeiten kann die gespeicherte Luft nach Wiedererwärmung über einen Expander, wie z.B. eine Turbine, entspannt werden. Die dabei beziehungsweise in einem nachgeschalteten Generator erzeugte elektrische Leistung kann in das Stromnetz eingespeist werden. In der Regel wird von solchen Druckluftspeicherkraftwerken gefordert, dass sie sehr oft (täglich) an-/abfahren und während des Betriebes ihre Leistung stark variieren können. Außerdem soll eine möglichst kurze Zeit ausreichen, um die Druckluftspeicherkraftwerke auf Nennleistung zu fahren. Die zu entspannende Luft muss vor dem Eintritt in den Expander auf hohe Temperaturen (Größenordnung 300 bis 550°C) erwärmt werden. Für die Bauteile des Expanders stellt das Anfahren, das heißt ein Kalt- oder Warmstart, eine besondere Herausforderung dar, da der schützende Kondensatfilm, der sich beim Anfahren einer Dampfturbine einstellt, fehlt. Deshalb ist anzustreben, dass der Expander vor dem Anfahren eine möglichst hohe Ausgangstemperatur aufweist. Darüber hinaus führen die häufigen, ausgeprägten Temperaturwechsel zur Ermüdung der Werkstoffe.

Im Turbinenbau ist es üblich, das Außengehäuse, das heißt insbesondere das Außengehäuse des Expanders, thermisch zu isolieren, beispielsweise durch eine Mattenisolierung oder eine Spritzisolierung. Auch externe elektrische Heizungen sind zur Aufheizung des Expanders üblich. Isolierungen können aber keine kurzen Startzeiten eines Expanders gewährleisten. Externe elektrische Heizungen sind ihrerseits sehr energieaufwändig und erzeugen hohe Extrakosten.

Aus der GB 2 476 489 A1 ist ein Druckluftspeicherkraftwerk mit zwei in Reihe geschalteten Kompressoren, einem Druckluftbehälter und einer Turbine bekannt. Verdichtete Luft ist von den Kompressoren über eine Druckleitung in den Druckluftbehälter und von diesem über die Druckleitung in die Turbine leitbar. Das Druckluftspeicherkraftwerk weist einen Wärmetauschkreislauf auf, der zur Aufnahme von Wärme der Kompressoren zur Aufnahme von Wärme der komprimierten Luft und zum Abgeben der Wärme an die Turbine ausgebildet ist. Als Heizmedium für den Wärmetauschkreislauf wird Wasser verwendet. Ein derartiges Druckluftspeicherkraftwerk weist hohe Wärmeverluste und somit einen relativ schlechten Wirkungsgrad auf.

Es ist daher die Aufgabe der vorliegenden Erfindung, die voranstehend beschriebenen Nachteile bei einem Druckluftspeicherkraftwerk beziehungsweise bei Betreiben eines Druckluftspeicherkraftwerks mit einem Expander zumindest teilweise zu vermeiden. Insbesondere ist es eine Aufgabe der vorliegenden Erfindung, ein Druckluftspeicherkraftwerk sowie ein Verfahren zum Betreiben eines Druckluftspeicherkraftwerks bereitzustellen, welche ein einfaches, kostensparendes Anfahren des Expanders des Druckluftspeicherkraftwerks ermöglichen sowie den Inspektionsaufwand des Expanders und damit des Druckluftspeicherkraftwerks vermindern und die Lebensdauer des Expanders und damit des Druckluftspeicherkraftwerks verlängern.

Die voranstehende Aufgabe wird gelöst durch ein Druckluftspeicherkraftwerk mit den Merkmalen des Anspruchs 1 sowie ein Verfahren zum Betreiben eines Druckluftspeicherkraftwerks mit den Merkmalen des Anspruchs 9. Weitere Merkmale und Details der Erfindung ergeben sich aus den Unteransprüchen, der Beschreibung und der Zeichnung. Dabei gelten Merkmale und Details, die im Zusammenhang mit dem Druckluftspeicherkraftwerk beschrieben worden sind selbstverständlich auch im Zusammenhang mit dem Verfahren zum Betreiben eines Druckluftspeicherkraftwerks und jeweils umgekehrt, sodass bezüglich der Offenbarung zu den einzelnen Erfindungsaspekten stets wechselseitig Bezug genommen wird bzw. werden kann. Mit dem erfindungsgemäßen Druckluftspeicherkraftwerk kann selbstverständlich auch das erfindungsgemäße Verfahren ausgeführt werden.

Gemäß einem ersten Aspekt der vorliegenden Erfindung wird die Aufgabe durch ein Druckluftspeicherkraftwerk gelöst, welches einen Druckluftspeicher, wenigstens einen Kompressor, der zur Beaufschlagung des Druckluftspeichers mit Luft über zumindest eine Kompressorleitung mit dem Druckluftspeicher fluidkommunizierend verbunden ist, sowie einen Expander, der zur Entspannung des Druckluftspeichers über zumindest eine Expanderleitung mit dem Druckluftspeicher fluidkommunizierend verbunden ist, gelöst. Dabei ist das Druckluftspeicherkraftwerk erfindungsgemäß dadurch gekennzeichnet, dass die im wenigstens einen Kompressor bei der Kompression der Luft entstehende Wärme auf eine Heizmedium übertragbar ist, welches über zumindest eine Aufheizleitung des Druckluftspeicherkraftwerks zur Aufheizung des Expanders in den Expander leitbar ist.

Bei Druckluftspeicherkraftwerken arbeitet stets nur ein Teil des Stranges des Druckluftspeicherkraftwerks, das heißt entweder der Kompressionsteil oder der Expansionsteil. Erfindungsgemäß kann die bei der Kompression entstehende Wärme zur Aufheizung des Expanders genutzt werden, wenn dieser nicht in Betrieb ist. Die entstehende Wärme kann auf ein Heizmedium, welches vorzugsweise Luft ist, übertragen werden, dass wiederum in eine Aufheizleitung übertragen werden kann, um in den stillstehenden Expander eingeleitet zu werden. Hierdurch kann der Expander erwärmt werden beziehungsweise zumindest kann seine Abkühlung während seines Stillstands verzögert werden. Durch die Aufheizung des Expanders beziehungsweise das Halten eines bestimmten Temperaturbereichs ist sichergestellt, dass dieser beim Anfahren keinen sogenannten "Kaltstart" fährt, sondern einen "Warmstart". Hierdurch ist ein einfaches, kostensparendes Anfahren des Expanders des Druckluftspeicherkraftwerks ermöglicht. Gleichzeitig kann der Inspektionsaufwand für den Expander und damit des Druckluftspeicherkraftwerks vermindert und die Lebensdauer des Expanders und damit des Druckluftspeicherkraftwerks verlängert
werden.

Die bei der Kompression der Luft entstehende Wärme kann über die zumindest eine Aufheizleitung in den Expander geleitet werden, so dass dieser bereits vor seinem eigentlichen Betrieb, das heißt bei einer Entspannung der im Druckluftspeicher komprimierten Luft, aufgeheizt ist. Die Temperaturdifferenzen, denen der Expander normalerweise ausgesetzt wäre, gehen durch das Vorheizen des Expanders deutlich zurück. Vorzugsweise sind zwei in Reihe geschaltete Kompressoren vorgesehen, die nacheinander Luft komprimieren, um hochkomprimierte Luft in den Druckluftspeicher einzuleiten. Besonders bevorzugt kann bei einem Druckluftspeicherkraftwerk vorgesehen sein, dass ein erster Kompressor als Niederdruckverdichter und ein nachfolgender Kompressor als Hochdruckverdichter ausgebildet sind. Das heißt, die im Niederdruckverdichter komprimierte und aufgeheizte Luft wird anschließend im Hochdruckverdichter weiter verdichtet und aufgeheizt.

Zur Übertragung der in dem wenigstens einen Kompressor entstehenden Wärme auf das Heizmedium ist vorzugsweise an der Kompressorleitung zwischen dem Kompressor und dem Druckluftspeicher zumindest ein Wärmetauscher beziehungsweise Zwischenkühler angeordnet. Über den Wärmetauscher kann die bei der Kompression im Kompressor entstehende Wärme auf ein Heizmedium übertragen werden. Vorteilhaft dabei ist, dass die komprimierte Luft in der Kompressorleitung gleichzeitig abgekühlt wird, bevor sie in einer weiteren Kompression erneut aufgeheizt wird beziehungsweise bevor sie in den Druckluftspeicher eingeleitet wird. Die zumindest eine Aufheizleitung ist fluidkommunizierend mit dem zumindest einen Wärmetauscher verbunden, so dass das im Wärmetauscher aufgeheizte Heizmedium in die zumindest eine Aufheizleitung geleitet werden kann.

Das Heizmedium ist Luft. Das in den Expander eingeleitete Heizmedium, insbesondere der warme Luftstrom, kann den Expander durch dessen Wellenabdichtungen wieder verlassen. Durch das Ein- beziehungsweise Durchleiten des Heizmediums durch den Expander, kann dieser während seines Stillstands aufgeheizt werden und somit in Betriebsbereitschaft gehalten werden.

Gemäß einer bevorzugten Weiterbildung der Erfindung kann bei einem Druckluftspeicherkraftwerk vorgesehen sein, dass in der zumindest einen Aufheizleitung ein regelbares Absperrorgan angeordnet ist, welches durch eine Kontrolleinheit des Druckluftspeicherkraftwerks regelbar ist. Das regelbare Absperrorgan kann beispielsweise ein Absperrschieber, eine Absperrklappe oder ein Absperrhahn, wie beispielsweis ein Kugelhahn, sein. Bevorzugt ist das regelbare Absperrorgan als Ventil ausgebildet. Die Kontrolleinheit kann durch Ansteuerung des regelbaren Absperrorgans die Wärmemenge, die durch die Aufheizleitung zu dem Expander strömt, einstellen. Bevorzugt kann die Kontrolleinheit über das regelbare Absperrorgan die Durchflussmenge an Heizmedium durch die Aufheizleitung in Abhängigkeit der Temperatur im Expander regeln.

Bevorzugt kann ferner bei einem Druckluftspeicherkraftwerk vorgesehen sein, dass Heizmedien aus zwei oder mehr Wärmetauschern, die an unterschiedlichen Positionen an der Kompressorleitung angeordnet sind, in der Aufheizleitung, insbesondere in einer Mischstrecke der einen Aufheizleitung, zusammengeführt werden. Das bedeutet, an der Kompressorleitung sind wenigstens zwei Wärmetauscher beziehungsweise Zwischenkühler beabstandet zueinander angeordnet. Diese kühlen die komprimierte Luft in der Kompressorleitung und heizen jeweils gleichzeitig ihr Heizmedium, vorzugsweise ebenfalls Luft, auf. Die aufgeheizten Heizmedien eines jeden Wärmetauschers werden dann in die Aufheizleitung, die zum Expander führt, zusammengeführt. Die Zusammenführung kann in einer sogenannten Mischstrecke erfolgen. Hierdurch kann eine gute Durchmischung der unterschiedlich heißen Heizmedien erreicht werden.

So kann beispielsweise ein erster Wärmetauscher die bei der Kompression der Luft in einem ersten Kompressor entstehende Wärme aufnehmen und in die Aufheizleitung leiten, währenddessen ein zweiter Wärmetauscher die bei der Kompression der Luft in einem zweiten Kompressor entstehende Wärme aufnehmen und in die Aufheizleitung leiten kann, um die Wärme dann an den Expander weiterzuleiten. Hierdurch sind höhere Aufheiztemperaturen möglich.

Gemäß einer weiteren vorteilhaften Weiterentwicklung der Erfindung kann bei einem Druckluftspeicherkraftwerk vorgesehen sein, dass der Expander zwei oder mehr Einlässe zum Einleiten des Heizmediums oder verschiedener Heizmedien aufweist. Bei einem Expander, der zwei oder mehr Einlässe aufweist, kann die Wärme gleichmäßig in alle Teile des Expanders eingeleitet werden. Hierdurch wird eine gleichmäßige Erhitzung des Expanders gewährleistet.

Es kann aber auch von Vorteil sein, wenn der Expander unterschiedlich stark aufgeheizt wird. Das heißt, es kann Sinn machen, dass bestimmte Bereiche des Expanders eine höhere Aufheizung erfordern, als andere Bereiche. Entsprechend bevorzugt kann bei einem Druckluftspeicherkraftwerk vorgesehen sein, dass ein erster Wärmetauscher über eine erste Aufheizleitung und ein zweiter Wärmetauscher über eine zweite Aufheizleitung mit dem Expander fluidkommunizierend verbunden sind. So kann über eine erste Aufheizleitung Wärme, die bei der Kompression in einem ersten Wärmetauscher entstanden ist, über entsprechend erste Einlässe des Expanders in diesen eingeleitet werden und über eine zweite Aufheizleitung kann Wärme, die bei der Kompression in einem zweiten Wärmetauscher entstanden ist, über entsprechend zweite Einlässe des Expanders in diesen eingeleitet werden, wobei die Temperaturen in den zwei Aufheizleitungen unterschiedlich hoch sind. So kann die Kompressionswärme in dem zweiten Wärmetauscher höher sein, als in dem ersten Wärmetauscher, falls der erste Wärmetauscher ein Niederdruckverdichter ist und der zweite Wärmetauscher ein Hochdruckverdichter. Auf diese Weise können bestimmte Bereiche des Expanders gezielt stärker aufgeheizt werden als andere Bereiche. Die Kontrolleinheit ist vorzugsweise mit den regelbaren Absperrorganen einer jeden Aufheizleitung verbunden, so dass gezielt, in Abhängigkeit der Temperatur in unterschiedlichen Bereichen des Expanders, der Wärmeeintrag in die Bereiche des Expanders geregelt werden können. So kann beispielsweise ein Ventil in der ersten Aufheizleitung geschlossen werden, so dass kein Heizmedium über die erste Aufheizleitung zu dem Expander geleitet wird, währenddessen ein Ventil in der zweiten Aufheizleitung geöffnet ist, so dass gezielt nur die höhere Wärme aus der zweiten Kompression zu dem Expander geleitet wird.

Das über die Wellendichtungen des Expanders ausströmende Heizmedium, insbesondere der warme Luftstrom, kann an die Umgebung abgegeben werden. Alternativ kann diese Abwärme auch genutzt werden, um die bei der Expansion aus dem Druckluftspeicher abgegebene Druckluft vorzuheizen.

Der Expander des Druckluftspeicherkraftwerks ist vorzugsweise eine Turbine, insbesondere eine Luft- oder Gasturbine.

Bei einem bevorzugten Druckluftspeicherkraftwerk ist der Expander mit einem Generator zur Erzeugung elektrischer Energie gekoppelt. Das heißt, die Druckluft aus dem Druckluftspeicher wird genutzt, um den Expander, beispielsweise eine Luftturbine, anzutreiben, welcher seine Leistung an einen angeschlossenen Generator abgibt, der elektrischen Strom erzeugt, der dann in ein Stromnetz eingespeist werden kann.

Gemäß einem zweiten Aspekt der Erfindung wird die Aufgabe durch ein Verfahren zum Betreiben eines Druckluftspeicherkraftwerks, welches gemäß dem ersten Aspekt der Erfindung ausgebildet ist, gelöst. Das Verfahren ist dabei durch nachfolgende Verfahrensschritte gekennzeichnet:
- Komprimieren von Luft in dem wenigstens einen Kompressor und Zuführen der komprimierten Luft durch die Kompressorleitung zum Druckluftspeicher,
- Ableiten der bei der Kompression der Luft im wenigstens einen Kompressor entstehenden Wärme über die zumindest eine Aufheizleitung in den Expander zum Aufheizen des Expanders.

Die während des Komprimierens der Luft in dem wenigstens einen Kompressor entstehende Wärme wird genutzt, um den Expander aufzuheizen. Hierzu wird die Wärme in die zumindest eine Aufheizleitung eingeleitet und zu dem Expander geleitet, um diesen während seiner Außerbetriebphase auf- beziehungsweise vorzuheizen. D.h., die während des Betriebs des Kompressionsteils des Druckluftspeicherkraftwerks in einem Kompressor entstehende Wärme, wird in den Expansionsteil des Druckluftspeicherkraftwerks, d.h. in den Expander geführt, um diesen während seines Stillstandes auf den anstehenden Betrieb vorzubereiten.
Hierdurch wird der Expander während seines Stillstandes erwärmt beziehungsweise zumindest kann die Abkühlung während seines Stillstands verzögert werden. Durch die Aufheizung des Expanders beziehungsweise das Halten eines bestimmten Temperaturbereichs wird sichergestellt, dass der Expander beim anschließenden Anfahren keinen sogenannten "Kaltstart" durchführt, sondern einen "Warmstart". Durch die im Prozess des Druckluftspeicherkraftwerks anfallende Wärme, wird ein einfaches, kostensparendes Anfahren des Expanders des Druckluftspeicherkraftwerks ermöglicht. Gleichzeitig wird der Inspektionsaufwand für den Expander und damit des Druckluftspeicherkraftwerks vermindert und die Lebensdauer des Expanders und damit des Druckluftspeicherkraftwerks werden verlängert.

Gemäß einer bevorzugten Weiterentwicklung der Erfindung kann bei einem Verfahren vorgesehen sein, dass die in dem wenigstens einen Kompressor entstehende Wärme auf ein Heizmedium in dem zumindest einen Wärmetauscher übertragen wird, und dass das erhitzte Heizmedium in die zumindest eine Aufheizleitung geleitet wird. Über den Wärmetauscher, auch als Wärmeübertrager bezeichnet, kann die Wärme von dem komprimierten Luftstrom in dem wenigstens einen Kompressor, insbesondere in der Kompressorleitung, auf das Heizmedium übertragen werden, welches in die zumindest eine Aufheizleitung eingeleitet und durch die zumindest eine Aufheizleitung zu dem Expander geleitet wird.

Bei einem bevorzugten Verfahren kann ferner vorgesehen sein, dass durch die Kontrolleinheit jeweils das Absperrorgan in der zumindest einen Aufheizleitung zum Durchfluss des Heizmediums durch die zumindest eine Aufheizleitung geregelt wird, insbesondere in Abhängigkeit zur Temperatur im Expander. D.h., durch die Kontrolleinheit ist jedes einzelne Absperrorgan ansteuerbar. So kann durch die Kontrolleinheit ein jedes Absperrorgan gesondert angesteuert werden, um den Durchfluss des Heizmediums in der Aufheizleitung, in der das Absperrorgan angeordnet ist, zu variieren. Dabei kann der Durchfluss stufenlos verändert werden. Vorzugsweise regelt die Kontrolleinheit das oder die Absperrorgane in Abhängigkeit der durch einen oder mehrere Temperatursensoren im Expander gemessenen Temperatur(en). So kann die Kontrolleinheit die Aufheizung des Expanders kontrollieren und entsprechend durch Ansteuerung der regelbaren Absperrorgane beeinflussen. Stellt die Kontrolleinheit fest, dass in dem Expander eine gewünschte Aufheiztemperatur bereits erreicht ist, so kann sie durch entsprechende Steuersignale das oder die Absperrorgane ansteuern, so dass diese den Durchfluss von Heizmedium durch die Aufheizleitung(en) unterbinden. So können ein gezieltes Aufheizen des Expanders erreicht und ein Überheizen des Expanders verhindert werden. Vorzugsweise weist der Expander wenigstens einen Temperatursensor auf, der mit der Kontrolleinheit zur Weiterleitung der Messdaten an die Kontrolleinheit gekoppelt ist. Hierdurch kann das in den Expander eingeleitete Heizmedium, insbesondere dessen Menge, sehr genau eingestellt werden und dadurch die Temperatur im Expander exakt bestimmt werden. Insbesondere kann durch die Regelbarkeit des wenigstens eines Absperrorgans auch eine Abkühlung des Expanders verhindert werden. So kann das wenigstens eine Absperrorgan den Durchfluss von Heizmedium schließen für den Fall, dass dieses bei Stillstand des Kompressors nicht aufgeheizt wird.

Gemäß einer weiteren bevorzugten Weiterentwicklung der Erfindung kann bei einem Verfahren vorgesehen sein, dass Heizmedien aus zwei oder mehr Wärmetauschern dem Expander zugeführt werden, insbesondere an unterschiedlichen Einlässen des Expanders. Hierdurch können unterschiedliche Bereich des Expanders unterschiedlich stark aufgeheizt werden. Bereiche, die eine stärkere Aufheizung erfordern, können mit heißerem Luftstrom durchflutet werden als Bereiche, die eine geringere Aufheizung benötigen. So kann beispielsweise die bei der Kompression in einem ersten Kompressor entstehende Wärme über eine erste Aufheizleitung zu ersten Einlässen des Expanders geleitet werden, währenddessen die bei der Kompression in einem zweiten Kompressor entstehende Wärme über eine zweite Aufheizleitung zu zweiten Einlässen des Expanders geleitet werden kann. Vorzugsweise kann die Durchflussmenge an Heizmedium in jeder Aufheizleitung durch die Kontrolleinheit gesteuert beziehungsweise geregelt werden. So können unterschiedliche Bereiche des Expanders je nach Bedarf unterschiedliche aufgeheizt werden, um so bei einem Start des Expanders optimal auf die aus dem Druckluftspeicher ausströmende heiße Luft, die vor dem Eintritt in den Expander von ungefähr 40°C auf eine Temperatur von ca. 450°C bis 540°C erwärmt wird, vorbereitet zu sein. Daher ist ein Verfahren vorteilhaft, bei dem die Kontrolleinheit die Zufuhr von unterschiedlich heißen Heizmedien über zwei oder mehr Aufheizleitungen zu den unterschiedlichen Einlässen des Expanders steuert beziehungsweise regelt. Durch ein derartiges Verfahren ist eine energiesparende, technisch aufwandsarme Sicherstellung einer kurzen Startzeit des Expanders ermöglicht. Ferner können die Temperaturdifferenzen, denen der Expander normalerweise ausgesetzt ist, reduziert werden. Dadurch vermindern sich der Inspektionsaufwand und die Lebensdauer des Expanders und entsprechend des Druckluftspeicherkraftwerks verlängern sich. Nach oder während dem Aufheizen des Expanders wird zum Betreiben des Expanders über die Expanderleitung Druckluft aus dem Druckluftspeicher zu dem aufgeheizten Expander geleitet. Das bedeutet, auch wenn die Kompression von Luft gestoppt ist, für den Start der Expansion kann trotzdem noch Wärme zu dem Expander geleitet werden. Beispielsweise kann das Druckluftspeicherkraftwerk zusätzlich einen Wärmespeicher aufweisen, aus dem während des Betriebs des Expanders Wärme über die Aufheizleitung zu dem Expander geleitet werden kann. Der Wärmespeicher ist über die Kontrolleinheit ansteuerbar.

Weitere, die Erfindung verbessernde Maßnahmen ergeben sich aus der nachfolgenden Beschreibung zu einem Ausführungsbeispiel der Erfindung, welches in der Figur schematisch dargestellt ist. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigt schematisch:

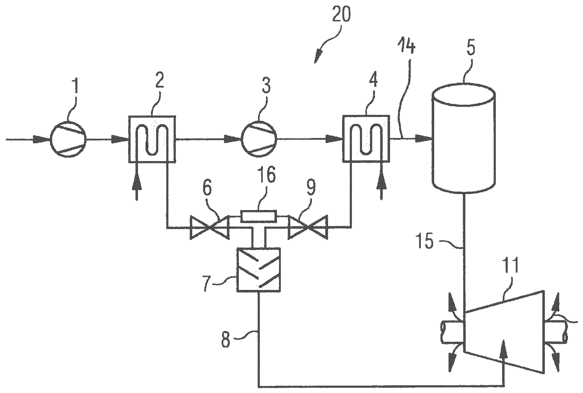

- Figur 1: ein Druckluftspeicherkraftwerk .

Fig. 1 zeigt ein erfindungsgemäßes Druckluftspeicherkraftwerk 20, welches einen ersten Kompressor 1, einen zweiten Kompressor 3 und einen Druckluftspeicher 5 aufweist. Der erste Kompressor 1 und der zweite Kompressor 3 sind über eine Kompressorleitung 14 miteinander verbunden. Die Kompressorleitung 14 führt zu dem Druckluftspeicher 5, so dass die in den Kompressoren 1, 3 nacheinander komprimierte Luft durch die Kompressorleitung 14 in den Druckluftspeicher 5 gepumpt werden kann. Der erste Kompressor 1 ist vorzugsweise ein Niederdruckverdichter, während der zweite Kompressor 3 ein Hochdruckverdichter ist. Das Druckluftspeicherkraftwerk 20 weist ferner einen Expander 11 auf, der zur Entspannung des Druckluftspeichers 5 über eine Expanderleitung 15 mit dem Druckluftspeicher 5 fluidkommunizierend verbunden ist. Die beiden Kompressoren 1, 3 bilden den Kompressionsteil, der Expander 11 den Expansionsteil des Druckluftspeicherkraftwerks 20. An der Kompressorleitung 14 zwischen dem Kompressor 1 und dem zweiten Kompressor 3 ist ein Wärmetauscher 2 angeordnet. Dieser dient dazu, die bei der Kompression der Luft im ersten Kompressor 1 entstehende Wärme dem komprimierten Luftstrom zu entziehen. Die entzogene Wärme wird indirekt auf ein Heizmedium, welches durch den Wärmetauscher 2 fließt, übertragen. An den Wärmetauscher 2 ist eine Aufheizleitung 8 angeschlossen, über die das aufgeheizte Heizmedium zu dem Expander 11 geführt und in diesen eingeleitet werden kann. Als Heizmedium dient insbesondere Luft. Die aufgeheizte Luft wird über nicht näher dargestellte Einlässe in den Expander 11 eingeführt, um diesen zu erhitzen. Um die Durchflussmenge an Heizmedium durch die Aufheizleitung 8 zu kontrollieren, ist in der Aufheizleitung 8 ein regelbares Absperrorgan 6 angeordnet, welches vorzugsweise ein Ventil ist. Über eine Kontrolleinheit 16 kann das regelbare Absperrorgan 6 angesteuert werden, so dass der Durchfluss an Heizmedium durch die Aufheizleitung 8 verändert werden kann. Vorzugsweise kann die Kontrolleinheit 16 das Absperrorgan 6 in Abhängigkeit der Temperatur im Expander 11 regeln. Hierzu können Temperatursensoren im Expander 11 angeordnet sein, die Temperaturdaten an die Kontrolleinheit 16 abgeben. In Strömungsrichtung zu dem Druckluftspeicher 5 ist nach dem ersten Wärmetauscher 2 der zweite Kompressor 3 angeordnet. Die im ersten Kompressor 1 verdichtete Luft wird im zweiten Kompressor 3 nochmals verdichtet. Nach dem zweiten Kompressor 3 ist an der Kompressorleitung 14 ein zweiter Wärmetauscher 4 angeordnet, der die bei der Kompression der Luft im zweiten Kompressor 3 entstehende Wärme aus dem Luftstrom entzieht und auf ein zweites Heizmedium, welches durch den zweiten Wärmetauscher 4 läuft, überträgt. Das erhitzte zweite Heizmedium wird in die Aufheizleitung 8 geleitet und über diese in den Expander 11 geführt. In dieser Ausführungsvariante des Druckluftspeicherkraftwerks 20 werden die in beiden Wärmetauschern 2, 4 aufgeheizten Heizmedien in ein und derselben Aufheizleitung 8 zusammengeführt. Über eine Mischstrecke 7 werden die Heizmedien vermischt. Vor der Einleitung des Heizmediums des zweiten Wärmetauschers 4 in die Mischstrecke 7 durchläuft das Heizmedium ein regelbares Absperrorgan 9. Dieses ist ebenfalls über die Kontrolleinheit 16 ansteuerbar. Durch die Ansteuerbarkeit der Absperrorgane 6, 9 kann die Temperatur des in den Expander 11 eingeleiteten Heizmediumstroms eingestellt werden. Das Heizmedium des zweiten Wärmetauschers 4 wird höher erhitzt, als das Heizmedium im Wärmetauscher 2. So kann je nach Stellung der Absperrorgane 6, 9 unterschiedliche heißes Heizmedium zu dem Expander 11 geleitet werden.

Der Vorteil des Druckluftspeicherkraftwerks 20 liegt darin, dass Kompressionswärme, die in der Regel durch Wärmeübertrager an die Umgebung abgegeben wird, genutzt werden kann, um den Expander 11 während seiner Stillstandphase aufzuheizen, um diesen auf den anschließenden Betrieb vorzubereiten. Diese Wärme kann in einen Luftstrom übertragen werden, der über die Aufheizleitung 8 in den stillstehenden Expander 11 eingeleitet werden kann und diesen damit erwärmt oder zumindest seine Abkühlung verzögert. Die Luft verlässt den Expander 11 vorzugsweise durch dessen Wellenabdichtungen. Da die Kompression vorzugsweise mehrstufig verläuft, kann die Temperatur der in den Expander eingeleiteten Luft mittels der regelbaren Absperrorgane 6, 9 und der Mischstrecke 7 sehr genau eingestellt werden. Eine Abkühlung des Expanders 11 durch die bei der Expansion der komprimierten Druckluft aus dem Druckluftspeicher 5 über die Expanderleitung 15 in den Expander 11 eingeleitete Luft kann dadurch effektiv und gleichzeitig kostengünstig verhindert werden.

Ein Vorteil des Druckluftspeicherkraftwerks 20 liegt in der energiesparenden, technisch aufwandsarmen Sicherstellung einer kurzen Startzeit des Expanders 11. Außerdem gehen die Temperaturdifferenzen, denen der Expander 11 normalerweise ausgesetzt ist, zurück. Damit vermindert sich der Inspektionsaufwand und die Lebensdauer des Druckluftspeicherkraftwerks 20 verlängert sich.

## Patentansprüche

1. Druckluftspeicherkraftwerk (20), umfassend einen Druckluftspeicher (5), wenigstens einen Kompressor (1, 3), der zur Beaufschlagung des Druckluftspeichers (5) mit Luft über zumindest eine Kompressorleitung (14) mit dem Druckluftspeicher (5) fluidkommunizierend verbunden ist, sowie einen Expander (11), der zur Entspannung des DruckluftSpeichers (5) über zumindest eine Expanderleitung (15) mit dem Druckluftspeicher (5) fluidkommunizierend verbunden ist,
**dadurch gekennzeichnet,**
**dass** die im wenigstens einen Kompressor (1, 3) bei der Kompression der Luft entstehende Wärme auf ein Heizmedium, welches Luft ist, übertragbar ist, welches über zumindest eine Aufheizleitung (8) des Druckluftspeicherkraftwerks (20) zur Aufheizung des Expanders (11) in den Expander (11) leitbar ist.

2. Druckluftspeicherkraftwerk (20) nach Anspruch 1,
**dadurch gekennzeichnet,**
**dass** zur Übertragung der in dem wenigstens einen Kompressor (1, 3) entstehenden Wärme auf das Heizmedium an der Kompressorleitung (14) zumindest ein Wärmetauscher (2, 4) angeordnet ist, wobei die zumindest eine Aufheizleitung (8) zur Einleitung des Heizmediums in die zumindest eine Aufheizleitung (8) fluidkommunizierend mit dem zumindest einen Wärmetauscher (2, 4) verbunden ist.

3. Druckluftspeicherkraftwerk (20) nach Anspruch 1 oder 2,
**dadurch gekennzeichnet,**
**dass** in der zumindest einen Aufheizleitung (8) ein regelbares Absperrorgan (6, 9) angeordnet ist, welches durch eine Kontrolleinheit (16) des Druckluftspeicherkraftwerks (20) regelbar ist.

4. Druckluftspeicherkraftwerk (20) nach einem der vorhergehenden Ansprüche,
**dadurch gekennzeichnet,**
**dass** Heizmedien aus zwei oder mehr Wärmetauschern (2, 4), die an unterschiedlichen Positionen an der Kompressorleitung (14) angeordnet sind, in der Aufheizleitung (8), insbesondere in einer Mischstrecke (7) der Aufheizleitung (8), zusammengeführt werden.

5. Druckluftspeicherkraftwerk (20) nach einem der vorhergehenden Ansprüche 1 bis 3,
**dadurch gekennzeichnet,**
**dass** der Expander (11.) zwei oder mehr Einlässe zum Einleiten des Heizmediums oder verschiedener Heizmedien aufweist.

6. Druckluftspeicherkraftwerk (20) nach einem der vorhergehenden Ansprüche,
**dadurch gekennzeichnet,**
**dass** ein erster Wärmetauscher (2) über eine erste Aufheizleitung (8) und eine zweiter Wärmetauscher (2) über eine zweite Aufheizleitung (8) mit dem Expander (11) fluidkommunizierend verbunden sind.

7. Druckluftspeicherkraftwerk (20) nach einem der vorhergehenden Ansprüche,
**dadurch gekennzeichnet,**
**dass** der Expander (11) eine Turbine, insbesondere eine Luft- oder Gasturbine, ist.

8. Druckluftspeicherkraftwerk (20) nach einem der vorhergehenden Ansprüche,
**dadurch gekennzeichnet,**
**dass** der Expander (11) mit einem Generator zur Erzeugung elektrischer Energie gekoppelt ist.

9. Verfahren zum Betreiben eines Druckluftspeicherkraftwerks (20) nach einem der vorhergehenden Ansprüche, **gekennzeichnet durch** nachfolgende Verfahrensschritte:
- Komprimieren von Luft in dem wenigstens einen Kompressor (1, 3) und Zuführen der komprimierten Luft durch die Kompressorleitung (14) zum Druckluftspeicher (5),
- Ableiten der bei der Kompression der Luft im wenigstens einen Kompressor (1, 3) entstehenden Wärme über die zumindest eine Aufheizleitung (8) in den Expander (11) zum Aufheizen des Expanders (11).

10. Verfahren nach Anspruch 9,
**dadurch gekennzeichnet,**
**dass** die in dem wenigstens einen Kompressor (1, 3) entstehende Wärme auf ein Heizmedium in dem zumindest einen bzw. den Wärmetauscher (2, 4) übertragen wird, und dass das erhitzte Heizmedium in die zumindest eine Aufheizleitung (8) geleitet wird.

11. Verfahren nach Anspruch 9 oder 10,
**dadurch gekennzeichnet,**
**dass** durch eine bzw. die Kontrolleinheit (16) jeweils das Absperrorgan (6, 9) in der zumindest einen Aufheizleitung (8) zum Durchfluss des Heizmediums durch die zumindest eine Aufheizleitung (8) geregelt wird, insbesondere in Abhängigkeit der Temperatur in dem Expander (11).

12. Verfahren nach einem der Ansprüche 9 bis 11,
**dadurch gekennzeichnet,**
**dass** Heizmedien aus zwei oder mehr Wärmetauschern (2, 4) dem Expander (11) zugeführt werden, insbesondere an unterschiedliche Einlässe des Expanders (11).

13. Verfahren nach einem der Ansprüche 9 bis 12,
**dadurch gekennzeichnet,**
**dass** eine bzw. die Kontrolleinheit (16) die Zufuhr von unterschiedlich heißen Heizmedien über zwei oder mehr Aufheizleitungen (8) zu den unterschiedlichen bzw. zu unterschiedlichen Einlässen des Expanders (11) steuert beziehungsweise regelt.

14. Verfahren nach einem der Ansprüche 9 bis 13,
**dadurch gekennzeichnet,**
**dass** nach oder während dem Aufheizen des Expanders (11) zum Betreiben des Expanders (11) über die Expanderleitung (15) Druckluft aus dem Druckluftspeicher (5) zu dem aufgeheizten Expander (11) geleitet wird.

## Claims

1. Compressed-air storage power plant (20) comprising a compressed-air store (5), at least one compressor (1, 3) which, for the purpose of charging the compressed-air store (5) with air, is connected via at least one compressor line (14) to the compressed-air store (5) in a fluid-communicating manner, and an expander (11) which, for the purpose of expansion for the compressed-air store (5), is connected via at least one expander line (15) to the compressed-air store (5) in a fluid-communicating manner,
**characterized**
**in that** the heat generated during the compression of the air in the at least one compressor (1, 3) is able to be transferred to a heating medium, said heating medium being air and being able to be conducted into the expander (11) via at least one heating line (8) of the compressed-air storage power plant (20) for the purpose of heating the expander (11).

2. Compressed-air storage power plant (20) according to Claim 1,
**characterized**
**in that**, for the purpose of transferring to the heating medium the heat generated in the at least one compressor (1, 3), at least one heat exchanger (2, 4) is arranged on the compressor line (14), wherein the at least one heating line (8), for the purpose of introducing the heating medium into the at least one heating line (8), is connected to the at least one heat exchanger (2, 4) in a fluid-communicating manner.

3. Compressed-air storage power plant (20) according to Claim 1 or 2,
**characterized**
**in that** a regulable shut-off element (6, 9), which is able to be regulated by a control unit (16) of the compressed-air storage power plant (20), is arranged in the at least one heating line (8).

4. Compressed-air storage power plant (20) according to one of the preceding claims,
**characterized**
**in that** heating media from two or more heat exchangers (2, 4), which are arranged on the compressor line (14) at different positions, are brought together in the heating line (8), in particular in a mixing path (7) of the heating line (8).

5. Compressed-air storage power plant (20) according to one of the preceding Claims 1 to 3,
**characterized**
**in that** the expander (11) has two or more inlets for introducing the heating medium or different heating media.

6. Compressed-air storage power plant (20) according to one of the preceding claims,
**characterized**
**in that** a first heat exchanger (2) is connected via a first heating line (8), and a second heat exchanger (2) is connected via a second heating line (8), to the expander (11) in a fluid-communicating manner.

7. Compressed-air storage power plant (20) according to one of the preceding claims,
**characterized**
**in that** the expander (11) is a turbine, in particular an air or gas turbine.

8. Compressed-air storage power plant (20) according to one of the preceding claims,
**characterized**
**in that** the expander (11) is coupled to a generator for the purpose of producing electrical energy.

9. Method for operating a compressed-air storage power plant (20) according to one of the preceding claims, **characterized by** the following method steps:
- compressing air in the at least one compressor (1, 3) and feeding the compressed air to the compressed-air store (5) through the compressor line (14),
- conducting away the heat generated during the compression of the air in the at least one compressor (1, 3) into the expander (11) via the at least one heating line (8) for the purpose of heating the expander (11).

10. Method according to Claim 9,
**characterized**
**in that** the heat generated in the at least one compressor (1, 3) is transferred to a heating medium in the at least one or the heat exchanger (2, 4), and in that the heated heating medium is conducted into the at least one heating line (8).

11. Method according to Claim 9 or 10,
**characterized**
**in that**, by way of a or the control unit (16), in each case the shut-off element (6, 9) in the at least one heating line (8) is regulated, in particular in a manner dependent on the temperature in the expander (11), for the purpose of the throughflow of the heating medium through the at least one heating line (8).

12. Method according to one of Claims 9 to 11,
**characterized**
**in that** heating media from two or more heat exchangers (2, 4) are fed to the expander (11), in particular to different inlets of the expander (11).

13. Method according to one of Claims 9 to 12,
**characterized**
**in that** a or the control unit (16) controls or regulates the feeding of heating media, which are at different temperatures, via two or more heating lines (8) to the different or to different inlets of the expander (11).

14. Method according to one of Claims 9 to 13,
**characterized**
**in that**, after or during the heating of the expander (11), for the purpose of operating the expander (11), compressed air from the compressed-air store (5) is conducted to the heated expander (11) via the expander line (15).

## Revendications

1. Centrale à réservoir d'air comprimé (20) comprenant un réservoir d'air comprimé (5), au moins un compresseur (1, 3), qui est relié, pour l'alimentation du réservoir d'air comprimé (5) en air, par l'intermédiaire d'une conduite de compresseur (14), avec le réservoir d'air comprimé (5) de manière fluidique, ainsi qu'un expanseur (11) qui est relié, pour la détente du réservoir d'air comprimé (5), par l'intermédiaire d'au moins une conduite d'expanseur (15), avec le réservoir d'air comprimé (5) de manière fluidique,
**caractérisée en ce que**
la chaleur générée dans l'au moins un compresseur (1, 3) lors de la compression de l'air peut être transmise vers un fluide de chauffage, qui est de l'air, qui peut être conduite, par l'intermédiaire d'au moins une conduite de chauffage (8) de la centrale à réservoir d'air comprimé (20), pour le chauffage de l'expanseur (11), vers l'expanseur (11).

2. Centrale à réservoir d'air comprimé (20) selon la revendication 1,
**caractérisée en ce que**
pour la transmission de la chaleur générée dans l'au moins un compresseur (1, 3), vers le fluide de chauffage, au moins un échangeur thermique (2, 4) est disposé au niveau de la conduite de compresseur (14), l'au moins une conduite de chauffage (8) étant reliée, pour l'introduction du fluide de chauffage dans l'au moins une conduite de chauffage (8), de manière fluidique avec l'au moins un échangeur de chaleur (2, 4) .

3. Centrale à réservoir d'air comprimé (20) selon la revendication 1 ou 2,
**caractérisée en ce que**
dans l'au moins une conduite de chauffage (8), est disposé un organe d'arrêt réglable (6, 9) qui peut être régulé par une unité de contrôle (16) de la centrale à réservoir d'air comprimé (20).

4. Centrale à réservoir d'air comprimé (20) selon l'une des revendications précédentes,
**caractérisée en ce que**
les fluides de chauffage provenant de deux échangeurs thermiques (2, 4) ou plus, qui sont disposés à différents endroits sur la conduite de compresseur (14), sont regroupés dans la conduite de chauffage (8), plus particulièrement dans une portion de mélange (7) de la conduite de chauffage (8).

5. Centrale à réservoir d'air comprimé (20) selon l'une des revendications 1 à 3,
**caractérisée en ce que**
l'expanseur (11) comprend deux entrées ou plus pour l'introduction du fluide de chauffage ou de différents fluides de chauffage.

6. Centrale à réservoir d'air comprimé (20) selon l'une des revendications précédentes,
**caractérisée en ce que**
un premier échangeur thermique (2) est relié par l'intermédiaire d'une première conduite de chauffage (8) et un deuxième échangeur thermique (2) est relié par l'intermédiaire d'une deuxième conduite de chauffage (8) de manière fluidique avec l'expanseur (11).

7. Centrale à réservoir d'air comprimé (20) selon l'une des revendications précédentes,
**caractérisée en ce que**
l'expanseur (11) est une turbine, plus particulièrement une turbine à air ou à gaz.

8. Centrale à réservoir d'air comprimé (20) selon l'une des revendications précédentes,
**caractérisée en ce que**
l'expanseur (11) est couplé avec un générateur pour la production d'énergie électrique.

9. Procédé d'exploitation d'une centrale à réservoir d'air comprimé (20) selon l'une des revendications précédentes, **caractérisé par** les étapes suivantes :
- compression de l'air dans l'au moins un compresseur (1, 3) et introduction de l'air comprimé par la conduite de compresseur (14) vers le réservoir d'air comprimé (5),
- déviation de la chaleur générée lors de la compression de l'air dans l'au moins un compresseur (1, 3) par l'intermédiaire de l'au moins une conduite de chauffage (8) vers l'expanseur (11) pour le chauffage de l'expanseur (11).

10. Procédé selon la revendication 9,
**caractérisé en ce que**
la chaleur générée dans l'au moins un compresseur (1, 3) est transmise à un fluide de chauffage dans l'au moins un ou dans l'échangeur thermique (2, 4) et **en ce que** le fluide de chauffage chauffé est conduit vers l'au moins une conduite de chauffage (8).

11. Procédé selon la revendication 9 ou 10,
**caractérisé en ce que**
grâce à une ou à l'unité de contrôle (16), l'organe d'arrêt (6, 9) dans l'au moins une conduite de chauffage (8) pour le passage du fluide de chauffage à travers l'au moins une conduite de chauffage (8) est régulé, plus particulièrement en fonction de la température dans l'expanseur (11).

12. Procédé selon l'une des revendications 9 à 11,
**caractérisé en ce que**
les fluides de chauffage provenant de deux échangeurs thermiques (2, 4) ou plus sont introduits dans l'expanseur (11), plus particulièrement au niveau de différentes entrées de l'expanseur (11).

13. Procédé selon l'une des revendications 9 à 12,
**caractérisé en ce que**
une ou l'unité de contrôle (16) contrôle ou régule l'introduction de fluides de chauffage de températures différentes par l'intermédiaire de deux conduites de chauffage (8) ou plus vers les différentes ou vers différentes entrées de l'expanseur (11).

14. Procédé selon l'une des revendications 9 à 13,
**caractérisé en ce que**
après ou pendant le chauffage de l'expanseur (11), pour l'exploitation de l'expanseur (11), de l'air comprimé est conduit, par l'intermédiaire de la conduite d'expanseur (15), du réservoir d'air comprimé (5) vers l'expanseur (11) chauffé.
